# EUROPÄISCHE PATENTSCHRIFT

(11) **EP 3 772 802 B1**
(45) Veröffentlichungstag und Bekanntmachung des Hinweises auf die Patenterteilung: **12.03.2025**
(21) Anmeldenummer: 20189019.1
(22) Anmeldetag: 31.07.2020
(51) Int. Cl.: H02K 7/00, H02K 1/04, H02K 7/116, H02K 11/01

(54) **TRAKTIONSMOTORWELLE, MOTOR MIT EINER TRAKTIONSMOTORWELLE, UND ANTRIEBSANLAGE**
TRACTION MOTOR SHAFT, MOTOR WITH A TRACTION MOTOR SHAFT AND DRIVE SYSTEM
ARBRE DE MOTEUR DE TRACTION, MOTEUR DOTÉ D'UN ARBRE DE MOTEUR DE TRACTION ET INSTALLATION D'ENTRAÎNEMENT

(30) Priorität: 05.08.2019 DE 102019121119
(43) Veröffentlichungstag der Anmeldung: 10.02.2021
(73) Patentinhaber: ALSTOM Holdings, 93400 Saint-Ouen-sur-Seine (FR)
(72) Erfinder: GANSTER, Markus, 8232 Grafendorf bei Hartberg (AT); PLATTNER, Roman, 3170 Hainfeld (AT); BAZANT, Martin, 8708 Männedorf (CH)
(74) Vertreter: Zimmermann & Partner Patentanwälte mbB

(56) Entgegenhaltungen:
- WO-A1-2004/082979
- CN-A- 105 720 730
- DE-A1- 102013 210 076
- DE-U1- 29 613 702
- GB-A- 2 231 447
- US-A- 4 097 758

## Beschreibung

Die Erfindung betrifft eine Traktionsmotorwelle mit einem gegenüber der Welle isolierten Motorritzel mittels einer Beschichtung zur Vermeidung von Strömen über Lager und Getriebeverzahnung von Traktionsantrieben, sowie eine Antriebsanlage.

Durch die stetig steigende Taktfrequenz und Schaltgeschwindigkeiten moderner IGBT (Bipolartransistor mit isolierter Gate-Elektrode) und SiC-Umrichter (Siliziumkarbid) im Schienenfahrzeugbetrieb kommt es vermehrt zu Lagerschäden durch Lagerströme, oder Schäden in der Verzahnung der Getriebe durch Stromdurchgänge. Hervorgerufen werden diese Stromdurchgänge durch die Kapazitäten im Motor zwischen der Statorwicklung und dem Gehäuse, zwischen den Wicklungen selbst, zwischen Statorwicklung und Rotor, zwischen dem Rotor und dem Gehäuse oder durch die Kapazitäten der Lager. Grundlegend gilt hier, dass je hochfrequenter die Anregungen sind, umso größer sind die entstehenden Ströme.

Man unterscheidet hierbei zirkulierende Ströme innerhalb des Antriebs, welche beispielsweise folgende Antriebsteile durchfließt: Stator - Gehäuse - Lager - Welle - Rotor - Stator. Weiterhin gibt es Ströme vom Rotor, welche über die Verzahnung des Getriebes auf den Radsatz wirken. Diese dargestellten Stromdurchgänge (zirkulierende Ströme und Rotorströme) führen zu stark erhöhtem Verschleiß der Lager, des Lagerfettes und der Verzahnung, bis hin zur Schädigung der genannten Bauteile. Auch erhöht sich diesbezüglich der Stromverbrauch.

Je nach verwendetem Antriebskonzept gibt es verschiedene Möglichkeiten, Lagerströme zu minimieren beziehungsweise diese zu verhindern. Der klassische Ansatz ist der Einsatz von isolierten Lagern oder/und Hybridlagern gegen zirkulierende Ströme im Motor und in weiterer Folge der Einsatz isolierter Kupplungen zwischen Motor und Getriebeverzahnung, um die Getriebeverzahnung und dessen Lager vor Strömen über die Verzahnung zu schützen. Für Antriebsformen, bei denen das Motorritzel zugleich das Kleinrad eines Getriebes darstellt, wird eine Erdungsbürste verwendet.

Aus der DE 10 2007 036 001 B4 ist ein elektrisch isolierendes Wellenanschlusselement bekannt, welche eine elektrische Isolation zwischen der Antriebsanlage eines Schienenfahrzeugs und dem Schienenstrang herstellt.

Die deutsche Offenlegungsschrift DE 36 39 132 A1 offenbart einen Elektromotor mit Riemenscheibe, wobei die Riemenscheibe unter Zwischenlage einer hochfesten, elektrisch isolierenden Schicht auf die Läuferwelle aufgepresst ist, die isolierende Schicht aus einem nicht fließenden Kunststoff besteht und die Riemenscheibe ohne weitere Befestigungsmittel auf der Läuferwelle gehalten wird. Die isolierende Schicht weist somit eine möglichst geringe Dicke auf und beeinträchtigt nicht den festen, verdrehsicheren Sitz der Riemenscheibe.

GB 2 231 447 A beschreibt einen Traktionsmotor mit einer in einem Lager gehaltenen Motorwelle, einem Rotor auf der Motorwelle, und einer Getriebekupplung auf der Motorwelle. Auf der Motorwelle ist im Bereich des Lagers eine Isolationsbeschichtung.

DE 296 13 702 U1 beschreibt einen kugel- bzw. wälzgelagerten Großelektromotor mit einer Motorwelle, einem Rotor auf der Motorwelle, und einer Getriebekupplung auf der Motorwelle. Zwischen der Motorwelle und der Getriebekupplung ist eine Oxidkeramischicht.

Die DE 10 2013 210 076 A1 beschreibt eine Kupplungsnabe mit einem Nabenkörper mit einer axialen Durchgangsöffnung zum Aufnehmen einer Welle. Die Innenfläche der Durchgangsöffnung weist eine elektrische Isolationsbeschichtung auf.

Die WO 2004/082979 A1 beschreibt einen Traktionsmotor, bei dem zur Vermeidung von Erdungsströmen das Gehäuse über einen Erdungskondensator geerdet ist.

Bei Antrieben, bei denen das Ritzel des Motors bereits Bestandteil des Getriebes ist und direkt als Kleinrad der Getriebeverzahnung wirkt, ist ein klassischer Isolationsansatz mittels isolierter Lager nicht möglich, da bei diesem Antriebskonzept trotz isolierter Lagerung im Motor ein Strom über die Verzahnung fließt, welcher entweder über die Getriebelager oder zum Beispiel über die Getriebeausgangswelle abgeleitet wird. Bei einem Einsatz stromisolierter bzw. Hybridlager im gesamten Getriebe und gleichzeitigem Einsatz einer isolierten Abtriebskupplung oder eines isolierten Rades ist speziell bei zweistufigen Getrieben oder Getrieben mit Zwischenwelle ein hoher Kostenfaktor von Nachteil. Die vorgenannte Antriebsform, bei der das Motorritzel gleichzeitig Kleinrad im Getriebe ist, kommt ohne Kupplung aus. In diesem Fall können die Ströme nur durch den Einsatz einer Erdungsbürste verhindert werden, was höchst wartungsanfällig, und somit zeit- sowie kostenintensiv, ist.

Es ist daher Aufgabe der vorliegenden Erfindung, die Getriebeteile (Verzahnung, Lager) vor Störstrome, insbesondere über die Getriebeverzahnung zu schützen und vor Wellenströmen zu sichern.

Diese Aufgabe wird erfindungsgemäß mit einer Traktionsmotorwelle nach Anspruch 1 gelöst. Weiterhin wird die Aufgabe mit einem Traktionsmotor nach Anspruch 11 und einer Antriebsanlage nach Anspruch 12 gelöst. gelöst. Weitere Ausführungsformen, Modifikationen und Verbesserungen ergeben sich anhand der folgenden Beschreibung und der beigefügten Ansprüche.

Es wird eine Traktionsmotorwelle umfassend ein Motorritzel, einen Ritzelsitz und einem Rotor vorgeschlagen. Der Ritzelsitz der Traktionsmotorwelle weist eine elektrische Isolationsbeschichtung geringer Kapazität gegen elektrische Ströme auf. Somit werden Erdungsströme nicht über die Verzahnung des Getriebes abgeleitet und eine Erdungsbürste ist nicht notwendig.

Die Traktionsmotorwelle weist eine Motorwelle mit einem Ritzelsitz, ein Motorritzel auf dem Ritzelsitz, und einen Rotor auf der Motorwelle auf. Eine elektrische Isolationsbeschichtung ist zwischen Ritzelsitz und Motorritzel angeordnet, wobei die elektrische Isolationsbeschichtung die Motorwelle mit dem Ritzelsitz gegen elektrische Ströme kapazitiv vom Motorritzel trennt.

Mittels der elektrischen Isolationsbeschichtung ist eine kapazitive Trennung von Motorritzel und Motorwelle möglich. Die kapazitive Trennung sollte so ausgestaltet sein, um einen kapazitiven Blindwiderstand zu begrenzen, da anderenfalls keine ausreichende Isolationswirkung aufgrund eines hohen kapazitiven Blindwiderstands erreicht wird.

Die Traktionsmotorwelle wird bei Schienenfahrzeugen eingesetzt, d. h. sie ist dafür angepasst. Dies ist insbesondere aufgrund stetig steigender Taktfrequenz und Schaltgeschwindigkeiten moderner Umrichter im Bahnbetrieb vorteilhaft und erforderlich, um verbesserte Motorantriebe, insbesondere effizientere Antriebssysteme zu gewährleisten.

Gemäß einer bevorzugten Ausführungsform weist der Rotor der mindestens teilweise eine elektrische Isolationsbeschichtung geringer Kapazität gegen elektrische Ströme auf.

Entsprechend einer spezifischen Ausgestaltungsform ist die elektrische Isolationsbeschichtung aus einem oder mehreren keramischen Faserverbundwerkstoffen und/oder aus Keramik hergestellt. Weitere elektrisch isolierende Mittel oder Materialien bzw. Materialkombinationen oder auch Kombinationen von Mitteln und Materialien, ebenso mit den zuvor genannten Materialien, sind möglich. Besonders bevorzugt sind keramischen Faserverbundwerkstoffen, die Aluminiumoxid enthalten, da Aluminiumoxid neben guten mechanischen Eigenschaften auch gute elektrische Isolationseigenschaften aufweist. Keramische Faserverbundwerkstoffe weisen gegenüber Keramiken zusätzlich eine höhere mechanische Festigkeit auf.

Im Zuge einer bevorzugten Ausführungsform wird offenbart, dass das Material der Keramikbeschichtung aus der Gruppe gewählt wird, die durch Aluminiumoxid, Magnesiumoxid, Zirkonoxid, Titanoxid, Aluminiumtitanat, Siliziumcarbid, Borcarbid, Siliziumnitrid, Aluminiumnitrid, Bornitrid, Aluminiumoxid/Titandioxid, Zirkoniumoxid und/oder Chromoxid gebildet wird. Keramikbeschichtungen bieten vorteilhafterweise eine gute Beständigkeit gegenüber Abrasion, Gleitverschleiß, Reibung und Oxidation, weisen also eine hohe Härte auf. Einige Keramikbeschichtungen sind auch beständig gegen Säuren und Laugen. Besondere Keramikmaterialien/- kombinationen weisen zudem Thermoschockbeständigkeit auf. Die eingesetzte Keramik ist bevorzugt technische Keramik bzw. Ingenieurskeramik, und ist ebenso unter dem Begriff Funktionskeramik bekannt. Besonders bevorzugt sind Keramikbeschichtungen aus Aluminiumoxid.

Gemäß einer Ausführungsform, die mit anderen hierin beschriebenen Ausführungsformen geeignet kombiniert werden kann, weist die elektrische Isolationsbeschichtung eine Beschichtungsstärke auf, die kleiner als 10 mm ist und größer als 1 µm ist. Je dicker die elektrische Isolationsbeschichtung ausgeführt wird, desto besser ist deren Isolationswirkung. Dickere elektrische Isolationsbeschichtungen führen weiterhin zu geringeren Kapazitäten. Allerdings können dickere elektrische Isolationsbeschichtungen mechanische Festigkeitsprobleme nach sich ziehen, z. B. unter mechanischer Belastung platzen. Außerdem führen sie insgesamt zu einem höheren Bauraum. Daher wird eine Dicke der elektrischen Isolationsbeschichtung von kleiner als 10 mm bevorzugt.

Gemäß einer Ausführungsform, die mit anderen hierin beschriebenen Ausführungsformen geeignet kombiniert werden kann, weist die elektrische Isolationsbeschichtung eine Beschichtungsstärke auf, die kleiner als 1 mm ist und größer als 0,1 mm, beispielsweise größer als 0,10 mm, und insbesondere größer als 0,2 mm, beispielsweise größer als 0,20 mm ist. Elektrische Isolationsbeschichtung mit einer Beschichtungsstärke in diesem Bereich haben sich als mechanisch stabil und ausreichend isolierend herausgestellt.

Besonders bevorzugt weist die elektrische Isolationsbeschichtung eine Beschichtungsstärke auf, die kleiner als 1 mm ist. Insbesondere eine Beschichtungsstärke von 0,7 mm und kleiner und größer als 0,2 mm ist vorteilhaft. Damit gehen neben günstigeren Herstellungskosten, verbesserter mechanischer Festigkeit und Isolationseigenschaften auch Platzeinsparungen einher.

Die elektrische Isolationsbeschichtung, d. h. die Kapazität, die durch die Motorwelle, die elektrische Isolationsbeschichtung und das Motorritzel gebildet wird, weist eine Kapazität von maximal 1 nF auf. Hierdurch wird die Belastung der Barriere (Isolationsschicht) auf einem akzeptablen Maße gehalten und einem vorzeitigen Verschleiß vorgebeugt. Höhere Kapazitäten führen zu einer Erhöhung des kapazitiven Blindwiderstands und ermöglichen höhere kapazitive Ströme, die vermieden werden sollen. In diesem Fall wäre eine Isolationswirkung nicht mehr ausreichend gegeben. In anderen Ausführungsform sind jedoch Kapazitäten von bis zu 100 nF möglich, wenn beispielsweise die Erdungsströme durch andere Maßnahmen geeignet begrenzt werden können.

Gemäß einer Ausführungsform, die mit anderen hierin beschriebenen Ausführungsformen geeignet kombiniert werden kann, ist weiterhin der Rotor mindestens teilweise - oder vollständig - durch eine elektrische Isolationsbeschichtung gegen elektrische Ströme von der Motorwelle getrennt.

Gemäß einer Ausführungsform, die mit anderen hierin beschriebenen Ausführungsformen geeignet kombiniert werden kann, bildet die elektrische Isolationsbeschichtung zwischen Ritzelsitz und Motorritzel zusammen mit der elektrischen Isolationsbeschichtung zwischen Rotor und Motorwelle eine zusammenhängende elektrische Isolationsbeschichtung. Alternativ ist es möglich, dass die elektrische Isolationsbeschichtung zwischen Ritzelsitz und Motorritzel von der elektrischen Isolationsbeschichtung zwischen Rotor und Motorwelle getrennt ist. Dadurch können unterschiedliche Materialien für die separaten elektrischen Isolationsbeschichtungen verwendet werden und/oder diese mit unterschiedlichen Dicken ausgebildet werden.

Gemäß einer weiteren zweckmäßigen Weiterbildung der Erfindung kann die elektrische Isolationsbeschichtung ausgedehnt sein und auf dieser ein konventionelles Lager aufgebracht sein.

Gemäß einer Ausführungsform, die mit anderen hierin beschriebenen Ausführungsformen geeignet kombiniert werden kann, weist die Traktionsmotorwelle mindestens ein Lager auf. Das Lager kann durch eine elektrische Isolationsbeschichtung gegen elektrische Ströme von der Motorwelle getrennt sein.

Gemäß einer Ausführungsform, die mit anderen hierin beschriebenen Ausführungsformen geeignet kombiniert werden kann, kann die elektrische Isolationsbeschichtung zwischen dem Lager und der Motorwelle mit einer der elektrischen Isolationsbeschichtungen zwischen Ritzelsitz und Motorritzel und zwischen Rotor und Motorwelle, oder mit beiden, eine zusammenhängende elektrische Isolationsbeschichtung bildet. Alternativ ist es möglich, dass die elektrische Isolationsbeschichtung zwischen dem Lager und der Motorwelle von den übrigen elektrischen Isolationsbeschichtungen getrennt ist. Es kann demnach eine einzige zusammenhängende elektrische Isolationsbeschichtung auf der Motorwelle vorhanden sein. Diese elektrische Isolationsbeschichtung ist dann "ausgedehnt". Alternative können voneinander getrennte elektrische Isolationsbeschichtungen verwendet werden, die dann bedarfsweise auch aus unterschiedlichen Materialien bestehen und/oder unterschiedliche Dicken aufweisen können.

Gemäß einer Ausführungsform, die mit anderen hierin beschriebenen Ausführungsformen geeignet kombiniert werden kann, ist die Isolationsbeschichtung zwischen Ritzelsitz und Motorritzel auf einer dem Ritzelsitz zugewandten Innenfläche des Motorritzels aufgebracht ist.

Eine erfindungsgemäße Antriebsanlage mit einem Motor mit Motorritzel als Bestandteil des Getriebes, wobei das Motorritzel als Kleinrad der Getriebeverzahnung wirkt, kann mit einer Traktionsmotorwelle ausgestattet sein, umfassend ein Motorritzel und einen Ritzelsitz, wobei der Ritzelsitz eine elektrische Isolationsbeschichtung geringer Kapazität gegen elektrische Ströme aufweist.

Gemäß der Erfindung ist die Antriebsanlage für Schienenfahrzeuge einsetzbar und minimiert somit die Lagerschäden und Getriebeschäden infolge stetig steigender Taktfrequenzen und erhöhter Schaltgeschwindigkeiten der Umrichter im Bahnbetrieb.

Insbesondere sind ebenso Kombinationen der erörterten erfindungsgemäßen Lösungen miteinander sowie mit dem Fachmann allgemein bekannter Prinzipien vorstellbar.

Die beiliegenden Zeichnungen veranschaulichen Ausführungsformen und dienen zusammen mit der Beschreibung der Erläuterung der Prinzipien der Erfindung. Die Elemente der Zeichnungen sind relativ zueinander und nicht notwendigerweise maßstabsgetreu. Gleiche Bezugszeichen bezeichnen hier entsprechend ähnliche Teile.

Figur 1 zeigt - in schematischer Darstellung - einen Schaltplan mit voll isoliertem Motorlager.

Figur 2 zeigt eine Schnittansicht einer Traktionsmotorwelle.

Wenngleich hierin spezifische Ausführungsformen dargestellt und beschrieben worden sind, liegt es im Rahmen der vorliegenden Erfindung, die gezeigten Ausführungsformen geeignet zu modifizieren, ohne vom Schutzbereich der vorliegenden Erfindung abzuweichen.

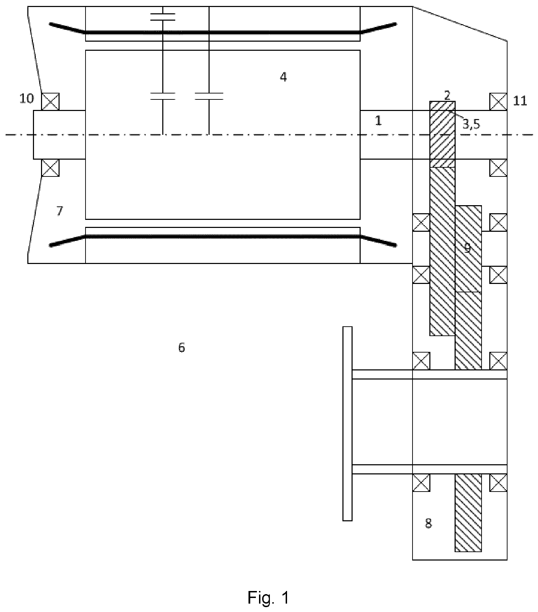

In Figur 1 ist schematisch eine Antriebsanlage 6 umfassend ein Motor 7 und Getriebe 8 dargestellt. Das Motorlager 10, sowie das eingangsseitige Getriebelager 11 sind voll isoliert ausgeführt Die dargestellte elektrische Isolationsbeschichtung 5 auf dem Ritzelsitz 3 führt dazu, dass der Rotor 4 vollständig isoliert ist und kein parasitärer Strom über das Motorritzel 2 und die Getriebeverzahnung 9 abgeführt wird.

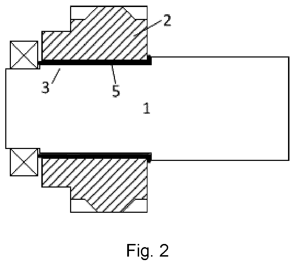

Figur 2 zeigt im Querschnitt eine Ausführungsform einer Antriebsanlage 6 mit einem Motorritzel 2 direkt auf der Motorwelle 1. Hierbei ist ersichtlich, dass die elektrische Isolationsbeschichtung 5 unter dem Motorritzel 2, bzw. auf seinen Innenlagerflächen eines integrierten Antriebs, auf dem Ritzelsitz 3 aufgebracht ist. Hierdurch wird der Stromfluss durch eine ausreichend niedrige Kapazität der elektrischen Isolationsbeschichtung 5 stark vermindert, um Schäden an Lager und Verzahnung zu verhindern.

### Bezugszeichenliste

- 1: Traktionsmotorwelle
- 2: Motorritzel
- 3: Ritzelsitz
- 4: Rotor
- 5: Isolationsbeschichtung
- 6: Antriebsanlage
- 7: Motor
- 8: Getriebe
- 9: Getriebeverzahnung
- 10: Motorlager
- 11: Eingangsseitiges Getriebelager

## Patentansprüche

1. Traktionsmotorwelle, aufweisend:
eine Motorwelle (1) mit einem Ritzelsitz (3),
ein Motorritzel (2) auf dem Ritzelsitz (3),
einen Rotor (4) auf der Motorwelle (1), und
eine elektrische Isolationsbeschichtung (5) zwischen Ritzelsitz (3) und Motorritzel (2) angeordnet ist,
wobei die elektrische Isolationsbeschichtung die Motorwelle (1) mit dem Ritzelsitz (3) gegen elektrische Ströme kapazitiv vom Motorritzel (2) trennt,
wobei durch die Motorwelle (1), die elektrische Isolationsbeschichtung (5) und das Motorritzel (2) eine Kapazität von maximal 1nF gebildet wird,
wobei die Traktionsmotorwelle bei einem Traktionsmotor eines Schienenfahrzeugs einsetzbar ist.

2. Traktionsmotorwelle nach Anspruch 1, **dadurch gekennzeichnet, dass** weiterhin der Rotor (4) mindestens teilweise durch eine elektrische Isolationsbeschichtung gegen elektrische Ströme von der Motorwelle (1) getrennt ist.

3. Traktionsmotorwelle nach Anspruch 2, **dadurch gekennzeichnet, dass** die elektrische Isolationsbeschichtung zwischen Ritzelsitz (3) und Motorritzel (2) zusammen mit der elektrischen Isolationsbeschichtung zwischen Rotor (4) und Motorwelle (1) eine zusammenhängende elektrische Isolationsbeschichtung bildet, oder dass die elektrische Isolationsbeschichtung zwischen Ritzelsitz (3) und Motorritzel (2) von der elektrischen Isolationsbeschichtung zwischen Rotor (4) und Motorwelle (1) getrennt ist.

4. Traktionsmotorwelle nach wenigstens einem der vorausgehenden Ansprüche, **dadurch gekennzeichnet, dass** die elektrische Isolationsbeschichtung (5) aus Keramik und/oder einem oder mehreren keramischen Faserverbundwerkstoffen, ausgestaltet ist, wobei die elektrische Isolationsbeschichtung (5) insbesondere aus einem keramischen Faserverbundwerkstoff gebildet ist, der Aluminiumoxid umfasst.

5. Traktionsmotorwelle nach einem der vorausgehenden Ansprüche, **dadurch gekennzeichnet, dass** das Material der elektrischen Isolationsbeschichtung aus technischer Keramik gebildet ist und insbesondere aus einem Material ausgewählt aus der Gruppe umfassend Magnesiumoxid, Zirkonoxid, Titanoxid, Aluminiumtitanat, Siliziumcarbid, Borcarbid, Siliziumnitrid, Aluminiumnitrid, Bornitrid, Aluminiumoxid/Titandioxid, Zirkoniumoxid und/oder Chromoxid gebildet ist, wobei das Material der elektrischen Isolationsbeschichtung insbesondere Aluminiumoxid umfasst.

6. Traktionsmotorwelle nach wenigstens einem der vorausgehenden Ansprüche, **dadurch gekennzeichnet, dass** die elektrische Isolationsbeschichtung (5) eine Beschichtungsstärke aufweist, die kleiner als 10 mm ist und größer als 1 µm ist.

7. Traktionsmotorwelle nach wenigstens einem der vorausgehenden Ansprüche, **dadurch gekennzeichnet, dass** die elektrische Isolationsbeschichtung (5) eine Beschichtungsstärke aufweist, die kleiner als 1 mm ist und größer als 0.1 mm, insbesondere größer als 0.2 mm ist.

8. Traktionsmotorwelle nach wenigstens einem der vorausgehenden Ansprüche, **dadurch gekennzeichnet**, weiterhin aufweisend mindestens ein Lager (10, 11), wobei das Lager (10, 11) durch eine elektrische Isolationsbeschichtung gegen elektrische Ströme von der Motorwelle (1) getrennt ist.

9. Traktionsmotorwelle nach Anspruch 8, **dadurch gekennzeichnet, dass** die elektrische Isolationsbeschichtung zwischen dem Lager (10, 11) und der Motorwelle (1) mit einer der elektrischen Isolationsbeschichtungen zwischen Ritzelsitz (3) und Motorritzel (2) und zwischen Rotor (4) und Motorwelle (1), oder mit beiden, eine zusammenhängende elektrische Isolationsbeschichtung bildet, oder dass die elektrische Isolationsbeschichtung zwischen dem Lager (10, 11) und der Motorwelle (1) von den übrigen elektrischen Isolationsbeschichtungen getrennt ist.

10. Traktionsmotorwelle nach wenigstens einem der vorausgehenden Ansprüche, **dadurch gekennzeichnet, dass** die Isolationsbeschichtung (5) zwischen Ritzelsitz (3) und Motorritzel (2) auf einer dem Ritzelsitz (3) zugewandten Innenfläche des Motorritzels (2) aufgebracht ist.

11. Traktionsmotor für ein Schienenfahrzeug, aufweisend einen Motor mit einem Stator und einer Traktionsmotorwelle nach einem der vorausgehenden Ansprüche.

12. Antriebsanlage (6) für ein Schienenfahrzeug, aufweisend einen Traktionsmotor (7) nach Anspruch 11 und ein Getriebe (8), wobei das Motorritzel (2) der Traktionsmotorwelle des Traktionsmotors als Bestandteil des Getriebes (8) ausgestaltet ist, wobei das Motorritzel (2) als Kleinrad einer Getriebeverzahnung (9) des Getriebes (8) wirkt.

13. Schienenfahrzeug mit einer Antriebsanlage (6) nach Anspruch 12.

## Claims

1. Traction motor shaft, comprising:
a motor shaft (1) with a pinion seat (3),
a motor pinion (2) on the pinion seat (3),
a rotor (4) on the motor shaft (1), and
an electrical insulating coating (5) arranged between the pinion seat (3) and the motor pinion (2),
the electrical insulating coating capacitively separating the motor shaft (1) with the pinion seat (3) against electrical currents from the motor pinion (2),
a capacitance of at most 1 nF being formed by the motor shaft (1), the electrical insulating coating (5) and the motor pinion (2),
the traction motor shaft being usable in a traction motor of a rail vehicle.

2. Traction motor shaft according to claim 1, **characterised in that**, furthermore, the rotor (4) is at least partially separated from the motor shaft (1) by an electrical insulating coating against electric currents.

3. Traction motor shaft according to claim 2, **characterised in that** the electrical insulating coating between the pinion seat (3) and motor pinion (2) together with the electrical insulating coating between the rotor (4) and motor shaft (1) forms a coherent electrical insulating coating, or that the electrical insulating coating between the pinion seat (3) and motor pinion (2) is separate from the electrical insulating coating between the rotor (4) and motor shaft (1).

4. Traction motor shaft according to at least one of the preceding claims, **characterised in that** the electrical insulating coating (5) is made of ceramic and/or one or more ceramic fibre-reinforced composites, the electrical insulating coating (5) being in particular formed from a ceramic fibre-reinforced composite comprising alumina.

5. Traction motor shaft according to one of the preceding claims, **characterised in that** the material of the electrical insulating coating is formed from technical ceramic and in particular is formed from a material selected from the group comprising magnesium oxide, zirconium oxide, titanium oxide, aluminium titanate, silicon carbide, boron carbide, silicon nitride, aluminium nitride, boron nitride, aluminium oxide/titanium dioxide, zirconium oxide and/or chromium oxide, the material of the electrical insulating coating comprising in particular aluminium oxide.

6. Traction motor shaft according to at least one of the preceding claims, **characterised in that** the electrical insulating coating (5) has a coating thickness which is less than 10 mm and greater than 1 µm.

7. Traction motor shaft according to at least one of the preceding claims, **characterised in that** the electrical insulating coating (5) has a coating thickness which is less than 1 mm and greater than 0.1 mm, in particular greater than 0.2 mm.

8. Traction motor shaft according to at least one of the preceding claims, **characterised in that** it further comprises at least one bearing (10, 11), the bearing (10, 11) being separated from the motor shaft (1) by an electrical insulating coating against electric currents.

9. Traction shaft according to claim 8, **characterised in that** the electrical insulating coating between the bearing (10, 11) and the motor shaft (1) forms a continuous electrical insulating coating with one of the electrical insulating coatings between the pinion seat (3) and the motor pinion (2) and between the rotor (4) and the motor shaft (1), or with both, or that the electrical insulating coating between the bearing (10, 11) and the motor shaft (1) is separated from the other electrical insulating coatings.

10. Traction motor shaft according to at least one of the preceding claims, **characterised in that** the insulating coating (5) between the pinion seat (3) and the motor pinion (2) is applied to an inner surface of the motor pinion (2) facing the pinion seat (3).

11. Traction motor for a rail vehicle, comprising a motor with a stator and a traction motor shaft according to one of the preceding claims.

12. Drive system (6) for a rail vehicle, comprising a traction motor (7) according to claim 11 and a gearbox (8), wherein the motor pinion (2) of the traction motor shaft of the traction motor is designed as a component of the gearbox (8), wherein the motor pinion (2) acts as a small wheel of a gear tooth system (9) of the gearbox (8).

13. Rail vehicle with a drive system (6) according to claim 12.

## Revendications

1. Arbre de moteur de traction, présentant :
un arbre de moteur (1) comportant un siège de pignon (3),
un pignon moteur (2) sur le siège de pignon (3),
un rotor (4) sur l'arbre de moteur (1), et
un revêtement isolant électrique (5) qui est disposé entre le siège de pignon (3) et le pignon moteur (2),
dans lequel le revêtement isolant électrique sépare l'arbre de moteur (1) comportant le siège de pignon (3) du pignon moteur (2) contre les courants électriques de manière capacitive,
dans lequel une capacité de 1 nF maximum est formée par l'arbre de moteur (1), le revêtement isolant électrique (5) et le pignon moteur (2),
dans lequel l'arbre de moteur de traction est apte à être utilisé dans un moteur de traction d'un véhicule ferroviaire.

2. Arbre de moteur de traction selon la revendication 1, **caractérisé en ce qu'**en outre le rotor (4) est au moins partiellement séparé de l'arbre de moteur (1) par un revêtement isolant électrique contre les courants électriques.

3. Arbre de moteur de traction selon la revendication 2, **caractérisé en ce que** le revêtement isolant électrique entre le siège de pignon (3) et le pignon moteur (2) forme, conjointement avec le revêtement isolant électrique entre le rotor (4) et l'arbre de moteur (1), un revêtement isolant électrique continu, **ou en ce que** le revêtement isolant électrique entre le siège de pignon (3) et le pignon moteur (2) est séparé du revêtement isolant électrique entre le rotor (4) et l'arbre de moteur (1).

4. Arbre de moteur de traction selon au moins l'une des revendications précédentes, **caractérisé en ce que** le revêtement isolant électrique (5) est conçu en céramique et/ou en un ou plusieurs matériaux composites renforcés de fibres céramiques, dans lequel le revêtement isolant électrique (5) est en particulier formé à partir d'un matériau composite renforcé de fibres céramique qui comprend de l'oxyde d'aluminium.

5. Arbre de moteur de traction selon l'une des revendications précédentes, **caractérisé en ce que** le matériau du revêtement isolant électrique est formé à partir de céramique technique et est en particulier formé à partir d'un matériau choisi dans le groupe comprenant oxyde de magnésium, oxyde de zirconium, oxyde de titane, titanate d'aluminium, carbure de silicium, carbure de bore, nitrure de silicium, nitrure d'aluminium, nitrure de bore, oxyde d'aluminium/dioxyde de titane, oxyde de zirconium et/ou oxyde de chrome, dans lequel le matériau du revêtement isolant électrique comprend en particulier de l'oxyde d'aluminium.

6. Arbre de moteur de traction selon au moins l'une des revendications précédentes, **caractérisé en ce que** le revêtement isolant électrique (5) présente une épaisseur de revêtement qui est inférieure à 10 mm et supérieure à 1 µm.

7. Arbre de moteur de traction selon au moins l'une des revendications précédentes, **caractérisé en ce que** le revêtement isolant électrique (5) présente une épaisseur de revêtement qui est inférieure à 1 mm et supérieure à 0,1 mm, en particulier supérieure à 0,2 mm.

8. Arbre de moteur de traction selon au moins l'une des revendications précédentes, **caractérisé en ce** présentant en outre au moins un palier (10, 11), dans lequel le palier (10, 11) est séparé de l'arbre de moteur (1) par un revêtement isolant électrique contre les courants électriques.

9. Arbre de traction selon la revendication 8, **caractérisé en ce que** le revêtement isolant électrique entre le palier (10, 11) et l'arbre de moteur (1) forme, avec l'un des revêtements isolants électriques entre le siège de pignon (3) et le pignon moteur (2) et entre le rotor (4) et l'arbre de moteur (1), ou avec les deux revêtements isolants électriques, un revêtement isolant électrique continu, **ou en ce que** le revêtement isolant électrique entre le palier (10, 11) et l'arbre de moteur (1) est séparé des autres revêtements isolants électriques.

10. Arbre de moteur de traction selon au moins l'une des revendications précédentes, **caractérisé en ce que** le revêtement isolant (5) est appliqué entre le siège de pignon (3) et le pignon moteur (2) sur une surface intérieure du pignon moteur (2) tournée vers le siège de pignon (3).

11. Moteur de traction pour un véhicule ferroviaire, présentant un moteur comportant un stator et un arbre de moteur de traction selon l'une des revendications précédentes.

12. Système d'entraînement (6) pour un véhicule ferroviaire, présentant un moteur de traction (7) selon la revendication 11 et une transmission (8), dans lequel le pignon moteur (2) de l'arbre de moteur de traction du moteur de traction est conçu comme composant de la transmission (8), dans lequel le pignon moteur (2) agit comme petit pignon d'une denture de transmission (9) de la transmission (8).

13. Véhicule ferroviaire comportant un système d'entraînement (6) selon la revendication 12.
